**Europäisches Patentamt**

(19) **European Patent Office**

**Office européen des brevets**

(11) Numéro de publication: **0 196 935**
**B1**

(12) **FASCICULE DE BREVET EUROPEEN**

(45) Date de publication du fascicule du brevet: **28.11.90**

(51) Int. Cl.⁵: **B 60 D 1/14**

(21) Numéro de dépôt: **86400409.8**

(22) Date de dépôt: **26.02.86**

(54) **Tête d'attelage.**

(30) Priorité: **01.03.85 FR 8503475**

(43) Date de publication de la demande:
**08.10.86 Bulletin 86/41**

(45) Mention de la délivrance du brevet:
**28.11.90 Bulletin 90/48**

(84) Etats contractants désignés:
**AT BE CH DE FR GB IT LI LU NL SE**

(56) Documents cités:
**EP-A-0 054 882**
**EP-A-0 132 702**
**FR-A-2 448 987**
**GB-A-1 179 139**
**US-A-3 697 099**
**US-A-3 790 191**
**US-A-4 019 754**

(73) Titulaire: **Woestelandt, Emile**
**180 rue du Général de Gaulle**
**F-59370 Mons en Baroeul (FR)**

(72) Inventeur: **Woestelandt, Emile**
**180 rue du Général de Gaulle**
**F-59370 Mons en Baroeul (FR)**

(74) Mandataire: **Ecrepont, Robert**
**Cabinet Ecrepont 12 Place Simon Vollant**
**F-59800 Lille (FR)**

Courier Press, Leamington Spa, England.

## Description

L'invention concerne une tête d'attelage à un véhicule tracteur d'une remorque équipée d'un timon articulé, telle que définie dans le préambule de la revendication 1 et connue par exemple du document EP—A—0132702. Plus précisément, l'invention s'applique à une tête d'attelage d'un timon qui comprend au moins deux bras articulés, d'un côté à un organe solidaire de la remorque et de l'autre à un organe solidarisable au véhicule par la dite tête d'attelage.

On connaît un tel timon ayant deux bras articulés (FR—A—1.552.857) et même trois ou quatre bras articulés de liaison entre la remorque et le véhicule tracteur.

D'une manière connue, ces bras de liaison articulés qui sont disposés selon les côtés d'un trapéze déformable, décalent d'un manière fictive le point d'articulation de la remorque par rapport au véhicule, et le raportent fictivement au voisinage du train arrière du véhicule.

Ceci améliore considérablement le comportement routier de la remorque et amortit ses mouvements de lacets, le cas échéant de tangage lorsque le timon présente plus de deux bras.

De tels timons nécessitent une tête d'attelage spéciale.

En effet, la simple tête à portée sphérique ne convient plus elle tolèrerait une articulation autour d'un axe vertical et fausserait le jeu des articulations du timon.

Afin de tenter d'y remédier, on connaît du document EP—A—0132702, une tête d'attelage constituée, d'une part, d'une partie avant coopérant avec une attache asociée au véhicle et, d'autre part, une partie arrière associée au timon, ces deux parties étant reliées entre elles par une articulation autour d'un axe horizontal et la partie avant de la tête d'attelage comprend:

— associée à l'attache solidaire du véhicule, un crochet, et,

— associée au timon, un élément coopérant avec le crochet et pourvu de moyens imobilisant cet élément en rotation autour de l'axe vertical du crochet.

Cette tête d'attelage comprend en outre un levier ariculé sur une pièce associée au timon et dont l'extrémité a sa face supérieure qui s'insère sous une face d'appui tournée vers le bas et solidaire du crochet, ce qui permet à l'aide de cette face supérieure de l'extrémité de ce levier d'aide à l'engagement de l'élément associé au timon sur ce crochet et à verrouiller cet élément avec le crochet.

La manoeuvre inverse du levier dégage son extrémité de la face d'appui et permet ensuite indépendamment du levier de dégager du crochet l'élément associé au timon.

Compte tenu de la charge qui s'applique sur le timon, ce dégagement est trés pénible.

Par ailleurs, la raideur que cet attelage communiquerait au timon favoriserait la transmission de secousses.

Un des buts de la présente invention est de proposer une tête d'attelage à un véhicule d'une remorque équipée d'un timon articulé qui peremette d'amortir les secousses que la remorque produit par réaction sur le véhicule, et donc d'améliorer le confort de conduite.

Un autre but de la présente invention est de proposer une tête d'attelage qui permette au timon articulé d'être aisément dégagé du crochet du véhicule.

Un autre but de l'invention est un tête d'attelage qui réalise une isolation électrique entre la remorque et le véhicule, empêchant en particulier le passage de l'électricité statique.

D'autres buts et avantages apparaîîtront au cours de la description qui va suivre.

A cet effet, l'invention vise une tête d'attelage du type précité notamment caractérisée en ce que le crochet comprend en outre une face d'appui complémentaire disposée de manière à coopérer avec le levier lors de sa manoeuvre dans le sens du déverrouillage pour faciliter le dégagement de la fixation du timon.

L'invention sera mieux comprise à l'aide de la description qui va suivre, fait à titre d'exemple non limitatif, en regard du dessin ci-annexé qui représente schématiquement:

— figure 1: une vue de dessus d'un timon articulé d'attelage,

— figure 2: une vue de dessus en coupe d'une partie de la tête d'attelage,

— figure 3: une vue en coupe par un plan transversal d'une variante de cette partie de la tête d'attelage,

— figure 4: une vue de profil de la tête d'attelage,

— figure 5: une vue de dessus de cette tête d'attelage,

— figures 6 à 8: des variantes de réalisation de la partie arrière de la tête,

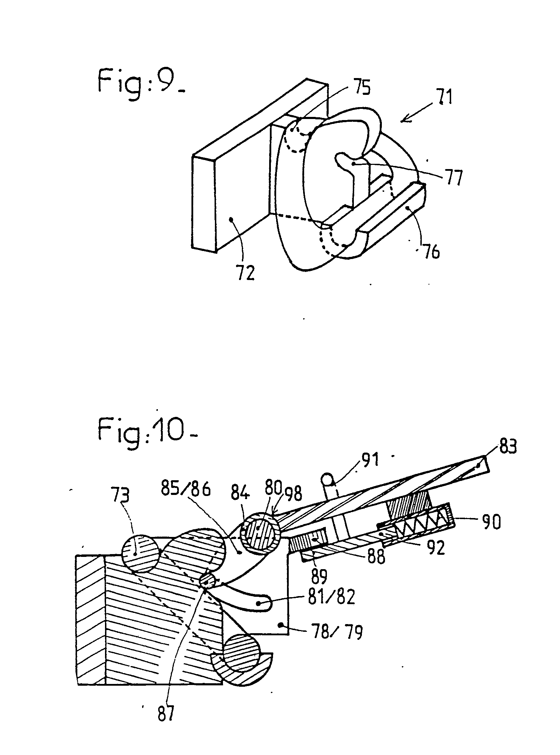

— figures 9 et 10: des variantes de réalisation de la partie avant de la tête.

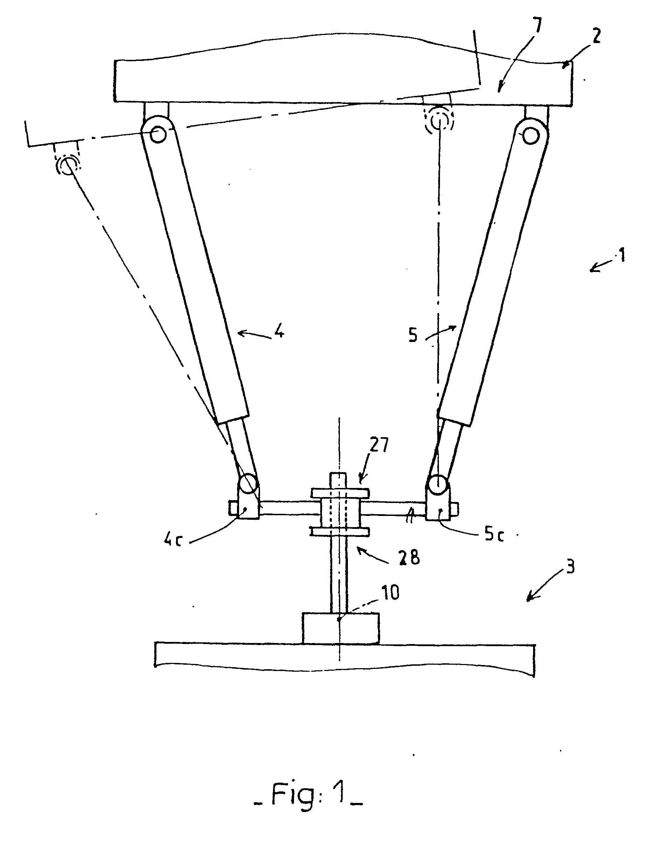

On a représenté dans la figure 1, à titre d'illustration non limitative de l'invention, un timon articulé d'attelage 1 reliant une remorque 2 à un véhicule tracteur 3.

Le timon 1 représenté dans la figure 1 comprend deux bras 4, 5.

Les bras 4, 5 articulés sont d'un côté à un organe transversal 6 solidarisable au véhicule 3 et de l'autre à un organe transversal 7 solidaire de la remorque 2 et qui est par exemple constitué par un élément de son chassis.

Les deux bras articulés 4, 5 et les éléments transversaux 6, 7 constituent, lorsque le véhicule et la remorque 2 sont en ligne, un trapéze isocèle déformable, dans un plan sensiblement horizontal, dont les côtés obliques que constituent les bras 4, 5 se coupent fictivement au voisinage de l'essieu arrière du véhicule.

D'une manière connue, cette disposition améliore le comportement routier de la caravane et notamment amortit l'amplitude de ses mouvements éventuels de lacets.

Da préférence, afin d'apter le timon 1 à differents types de véhicule, et d'améliorer encore le comportement routier de la remorque 2, des moyens 4$_c$, 5$_c$ de réglage de la distance entre les articulations des bras 4, 5 sur l'organe transversale 6 solidarisable au véhicule 2 sont prévus de façon à pouvoir déplacer le point fictif d'articulation de la remorque 2 et, en fonction du véhicule, et l'amener au voisinage de l'essieu arrière.

Le timon d'attelage 1 représenté dans la figure 1 n'est pas limitatif pour l'invention et d'une manière semblable, le timon pourrait être équipé de trois ou quatre bras différents qui ont pour but d'amortir les mouvements de lacets et/ou de tangage de la remorque 2.

Pour sa fixation à l'arrière du véhicule tracteur, le timon porte à son extrémité avant une tête d'attelage 28 qui, dans le but d'amortir les secousses qu'en roulant la remorque 2 produit sur l'arrière du véhicule 3 et d'améliorer encore le comportement routier de la remorque 2, comporte, pour sa liaison à l'organe transversal 6 du timon 1, un élément amortisseur 27.

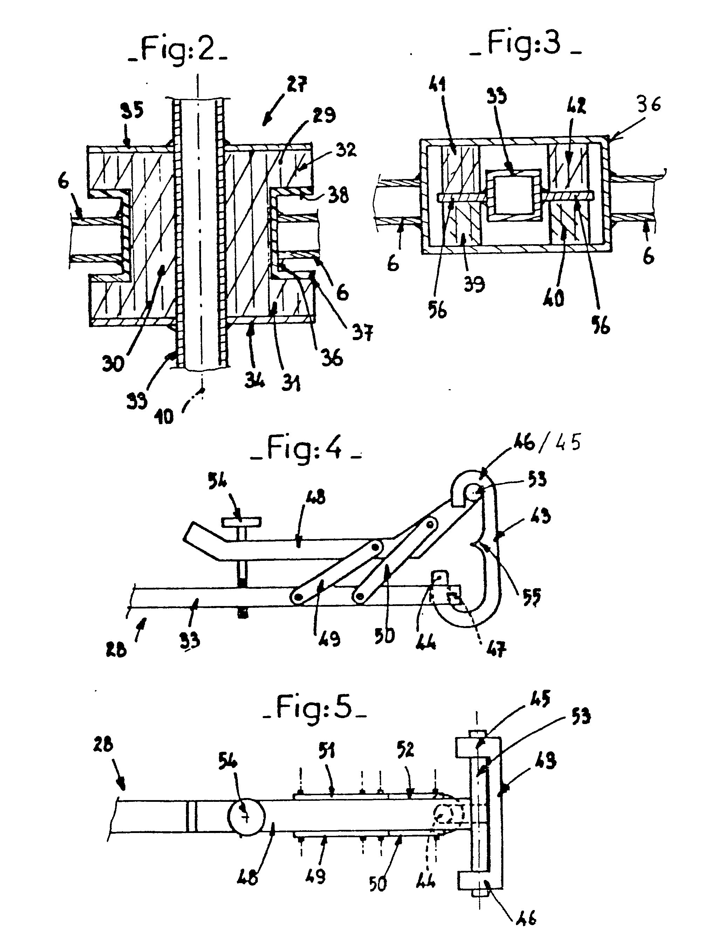

Une forme d'élément amortisseur de liaison 27 est représentée plus précisément en vue de dessus et en coupe en figure 2.

Cet élément présente une forme sensiblement cylindrique dont l'axe en position normale est confondu avec l'axe longitudinal 10 du véhicule 3.

L'éléement 27 comprend principalement un bloc amortisseur 29, qui est composé d'un partie centrale 30 sensiblement cylindrique de révolution, d'axe 10 et de part et d'autre deux parties extrêmes 31 et 32 en forme de disque, d'axe 10 et de diamètre supérieur au diamètre de la partie centrale 30.

Le bloc amortisseur 29 est réalisé en tout matériau approprié, connu pour ses propriétés d'amortissement, et par exemple en une matière caoutchoutée naturelle ou synthétique.

L'élément amortisseur comprend par ailleurs un tube 33 associé à la partie avant de la tête d'attelage 28 et qui traverse de part en part le bloc amortisseur 27, auquel sont de part et d'autre solidarisées deux flasques 34 et 35 de diamètre voisin du diamètre des parties 31 et 32 du bloc 27.

Le tube 33 présente en section toute forme appropriée, ronde, ovale, carrée, rectangulaire...

L'organe transversal 6 présente dans sa partie médiane autour de la partie centrale 30 du bloc amortisseur 29, un carter cylindrique 36 dont les dimensions intérieures correspondent aux dimensions extérieures de la partie centrale 30 du bloc 29.

Le carter cylindrique présente en section, toute forme appropriée, ronde, ovale, carrée, rectangulaire...

Le carter 36 est prolongé en outre au niveau de chacune de ses extrémités par deux rondelles 37, 38 d'axe 10, qui bordent les faces en regard des parties 31, 32 du bloc amortisseur 29.

De préférence, le bloc amortisseur 29 est assemblé par tout moyen approprié et notamment par collage, aux faces du tube 33 et de ses flasques 34, 35 du carter 36 et des rondelles 37, 38 avec lesquelles il est en contact ou, par adhérence, par un moulage direct du bloc amortisseur entre les différents éléments qui, à cet effet, peuvent présenter des aspérités.

Le bloc amortisseur 29 principalement par ses parties 31, 32 en forme de disque, agit comme amortisseur longitudinal, parallèlement à l'axe 10.

Il agit également comme amortisseur des mouvements relatifs de rotation, par rapport à l'axe 10 du véhicule, de l'organe transversal 6, et du tube 33, c'est à dire comme amortisseur des mouvements de roulis de la caravane 2.

Egalement le bloc amortisseur 29 amortit le désaxement du carter 36 et du tube 33 qui correspond à un mouvement de tangage de la remorque 2 par rapport au véhicule.

La dureté du bloc amortisseur peut être modulée à l'intérieur même du bloc en fonction de l'amortissement désiré.

De préférence, la liaison entre les bras 4, 5 et les organes transversaux 6, 7 autorisent pour la remorque 2 et par rapport au véhiculer 3 un mouvement relatif dans un plan sensiblement horizontal, et c'est au niveau de l'organe amortisseur de liaison 27 que sont absorbés les autres mouvements de la remorque 2 par rapport au véhicule.

Sous réserves d'un bridage efficace, le bloc amortisseur peut ne pas comprendre les parties extrêmes 31 et 32 en forme de disque. On peut ne prévoir qu'un bridage en demi-lune ne laissant de liberté que pour le tanguage.

La figure 3 représente une variante de réalisation, selon laquelle, le tube central 33 présente latéralement deux ailes 56.

Le carter 36 présente une forme rectangulaire, et au moins un ensemble de blocs amortisseurs 39 à 42 disposés longitudinalement assure la liaison entre sa face interne et les ailes 56 du tube 33.

Dans une variante de réalisation, l'élément amortisseur est conçu pour privilégier le tangage c'est à dire l'articulation autour d'un axe horizontal et transversal au véhicule par rapport au mouvement de lacets c'est à dire d'articulation autour d'un axe vertical.

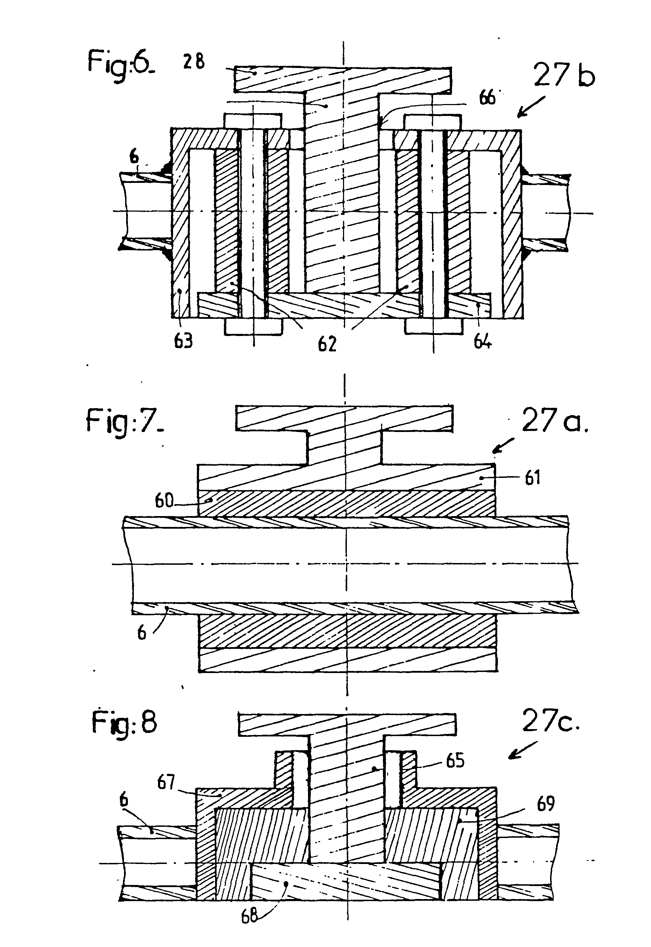

A cet effet, l'élément 27$_a$ (figure 6) peut être constitué d'un manchon élastique 60 enfilé sur l'organe transversal 6 et enserré dans un carter 61 relié à la partie avant de la tête d'attelage.

Dans ce cas, le bridage cité plus haut est également nécessaire.

L'élément 27$_b$ (figure 7) peut également être constitué de deux plots 62 placés horizontalement ou verticalement ou un seul plot de grande dimension agissant selon des axes qui sont situés dans un plan horizontal et qui sont intercalés entre une face de butée 63 associée à l'organe transversal avant 6 et une platine 64 associée à une tringle 65 portant à son extrémité libre la partie avant 28 de la tête d'attelage.

Afin de limiter les mouvements relatifs de la face de butée et la platine, dans le plan horizontal, on peut disposer de part et d'autre de l'élément 27 deux entretoises articulées autorisant les autres mouvements relatifs ou deux butées.

Par exemple, cette tringle passera entre les plots ou à travers le plot unique, et au travers d'un orifice 66 de la butée 63 de manière à faire travailler les plots en compression.

Enfin l'élément 27$_c$ (figure 8) peut comprendre une masse de matériau plastique 69 comblant la place qui, dans un carter 67 porté par l'organe transversal 6, est laissée libre par un plateau 68 de forme régulière ou allongée horizontalement associée à la tringle 65 portant la partie avant de la tête d'attelage.

Les figures 4, 5 sont relatives à un mode de réalisation des parties de la tête d'attelage associée, l'une 28 au timon et, l'autre 43 au véhicule et constituant une attache qui comprend principalement:

d'une part, un crochet inférieur central 44, situé sur l'axe longitudinal 10 du véhicule et dont l'extrémité est sensiblement verticale et cylindrique et,

d'autre part, sur les côtés de l'axe 10, deux crochets latéraux 45, 46 orientés vers le bas et surmontant le crochet central 44.

La partie 28 associée au timon 1 présente dans la partie antérieure du tube 33, un orifice 47 d'axe sensiblement vertical, qui s'adapte sur la partie sensiblement verticale du crochet 44.

Elle comprend également un levier 48 relié au tube 33 par des bras d'articulation 49 à 52 et présentant dans sa partie antérieure un verrou d'axe horizontal 53 qui vient se loger dans les deux crochets 45, 46 de la pièce 43.

Les bras d'articulation du levier 48 sont disposés de telle manière que, lorsque l'orifice 47 de l'extrémité antérieure du tube 33 est positionné sur l'extrémité du crochet 44, la manoeuvre du levier 48 provoque une mise en place du verrou 53 dans les crochets 45, 46 et le levier 48 peut être verrouillé dans cette position par la vis 54 ou un système d'encliquetage.

Cette dernière permet également de rattraper le jeu de fonctionnement au niveau des différents crochets.

L'ordre des crochets 44, 45, 46 (un en bas, deux en haut) peut être inversé soit deux en bas, un en haut.

L'attache 43 présente en outre sous les deux crochets 45, 46 un rebord arrondi 55, contre lequel, lors de la manoeuvre du levier 48, le verrou 53 vient prendre appui pour faciliter le dégagement de la fixation du timon.

Cet appui facilite le dégagement du tube 33 hors de l'extrémité du crochet 44.

Dans une variante de réalisation, la partie avant de la tête d'attelage 28 est constituée d'une attache ou crochet 71 fixée par un socle 72 au tracteur et d'un anneau 73 solidaire de la remorque.

Le crochet présente une échancrure supérieure 75 proche du socle, une gouttière inférieure 76 à l'autre extrémité et une échancrure 77 sur son bord postérieur.

L'anneau 73, de forme triangulaire dans l'exemple choisi, se fixe à quarante cinq degrés environ sur le crochet, de façon que sa traverse supérieure s'insère dans l'échancrure 75 et sa traverse inférieure dans la gouttière 76.

Le crochet présente à sa base une section triangulaire capable d'occuper toute la lumière de l'anneau.

L'anneau est solidarisé au timon par deux joues 78 et 79.

Une entretoise 80 les réunit à leur partie supérieure. Chaque joue comporte une lumière en arc de cercle 81 et 82 presque tangentielle à l'anneau.

Un dispositif de verrouillage est prévu; il comporte un levier 83 pivotant grâce à un manchon 84 autour de l'entretoise 80 et entraînant les leviers 85 et 86 solidarisés eux-même par une entretoise 87 qui les déborde de chaque côté de façon à coulisser dans les glissières 81 et 82.

La partie centrale de l'entretoise 87 s'insère dans l'échancrure 77 du crochet afin d'assurer le verrouillage de l'ensemble.

Afin de permettre un rattrapage de jeu, il est prévu que les arcs de cercle de l'échancrure 77 et des glissières 81 et 82 présentent un angle aigu.

Le levier 83 présente un épaulement 98 destiné à s'appuyer sur la partie supérieure du crochet lorsqu'on le lève, de façon à faciliter la libération de l'anneau, alors qu'il est prévu que l'insertion de l'anneau sur le crochet soit facilitée en abaissant le levier grâce à l'appui de l'entretoise 87 sur le bord supérieur de l'échancrure 77 ou d'une autre façon.

Afin d'éviter la désolidarisation accidentelle de l'anneau et du crochet, il est prévu un verrouillage du levier 83 dont voici un exemple.

L'angle aigu que forment entre eux le bord supérieur de l'échancrure 77 et celui de la glissière 81 et 82 permet d'obtenir un serrage de verrouillage.

Ce dispositif comporte d'une part, une gâche 88 solidaire des joues 78 et 79 et d'autre part, un pêne 89 associé au levier 83.

Un ressort 90 permet d'enclencher automatiquement l'ensemble alors qu'une manette 91 permet le désenclenchement.

Le pêne 89 peut être supporté pare un curseur 92 se déplaçant parallèlement au levier 83 ou bien par un levier pivotant autour d'un axe doté d'un ressort à action concentrique.

La gâche et le pêne ont leur face de cisaillement dans un plan légèrement oblique afin de permettre le rattrapage du jeu.

Le levier de même que la manette 91 peuvent constituer la poignée principalement de tout l'ensemble à la place du levier 83 ou une contre-poignée gachette.

Le verrouillage de l'anneau et du crochet peut être assuré par une pêne horizontal coulissant tangentiellement à la base de l'anneau et s'enclavant dans une échancrure adéquate du crochet ou de toute autre façon.

Il est bien entendu que l'anneau peut avoir une autre forme, rectangulaire, carrée ou ronde avec ou sans crantage et qu'il peut avoir uen position horizontale.

Le crochet peut également avoir une section rectangulaire, carrée, ronde avec ou sans crantage afin de s'adapter à la forme correspondante de l'anneau.

Le verrouillage de l'anneau et du crochet peut être assuré par un dispositif à vis ou par un système de clavetage quelconque telun élément excentrique.

L'élément rigide d'attelage peut être constitué par une barre horizontale perpendiculaire à l'axe longitudinal du tracteur et maintenue par deux crochets ou une gouttière avec un dispositif de verrouillage.

Dans cette variante de réalisation comme dans la précédente, la partie avant de la tête d'attelage comprend:

d'une part, une attache 43, 72 solidaire du véhicule portant:

une gouttière 76 ou 45, 46 d'axe horizontal transversal matérialisée par au moins deux crochets 45, 46,

un crochet 44, 75, et

un élément 55, 77 d'appui de l'extrémité d'un levier puis,

d'autre part, une partie associée au timon comprenant:

une barre transversale 53, 87 d'appui au fond de la gouttière,

un élément 47, 73 coopérant avec le crochet 44, 75,

un levier 48, 83 articulé sur le timon et dont l'extrémité 53, 87 coopére avec l'élément d'appui 55, 77 de l'attache, et

un organe 54, 89 de verrouillage du levier.

Naturellement, la présente description n'est donnee qu'à titre indicatif et l'on pourrait adopter d'autres mises en oeuvre de l'invention sans pour autant sortir du cadre de celle-ci.

**Revendications**

1. Tête d'attelage (28) à un véhicule tracteur (3) d'une remorque (2) équipée d'un timon articulé comprenant au moins deux bras (4, 5) articulés d'un côté à un organe transversal (6) solidarisable au véhicule et de l'autre à un organe transversal (7) solidaire de la remorque, les bras (4, 5) et les organes (6, 7) constituant lorsque le véhicule et la remorque sont en ligne, un trapéze isocèle déformable au moins dans un plan horizontal dont les deux côtés obliques constitués par les deux bras (4, 5) se coupent fictivement au voisinage du train arrière du véhicule, cette tête d'attelage comprenant, d'une part, une partie avant coopérant avec une attache (72) associée au véhicule et, d'autre part, une partie arrière de liaison au timon, la partie avant de la tête d'attelage comprenant:

associée à l'attache solidaire du véhicule, un crochet (44; 71), et,

associée au timon, un élément coopérant avec le crochet et pourvu de moyens immobilisant cet élément en rotation autour de l'axe vertical du crochet,

cette tête d'attelage comprenant en outre un levier (48; 83) articulé sur une pièce associé au timon et dont l'extrémité (53; 87) a sa face supérieure qui s'insère sous une face d'appui tournée vers le bas et soldaire du crochet, ce qui permet à l'aide de cette face supérieure de l'extrémite (53; 87) de ce levier d'aider à l'engagement de l'élément associé au timon sur ce crochet et à verrouiller cet élément avec le crochet,

cette tête d'attelage étant caractérisée en ce que le crochet comprend en outre une face d'appui complémentaire (55; partie supérieure de 71) disposée de manière à coopérer avec le levier lors de sa manoeuvre dans le sens du déverrouillage pour faciliter le dégagement de l'élément coopérant avec le crochet.

2. Tête d'attelage selon la revendication 1 dont:

l'élément coopérant avec le crochet (44), présenté par l'attache (43) associée au véhicule, consiste en un orifice (47) d'axe sensiblement vertical que présente la partie associé au timon et correspondant à l'extrémité du dit crochet (44),

la dite attache présente en outre au moins deux crochets (45, 46) orientés vers le bas,

cette attache étant caractérisée en ce que:

les deux crochets orientés vers le bas surmontent le crochet (44) recevant l'élément (47) associé au timon et,

la face d'appui complémentaire est situé sous les deux crochets (45, 46) et se présente sous la forme d'un rebord arrondi (55).

3. Tête d'attelage selon la revendication 1 dont le crochet (71) est proté par un socle (72) avec lequel il délimite une échancrure (75) dite supérieure, caractérisée en ce que:

vers son bord antérieur, le crochet (71) présente une échancrure (77) dite antérieure,

l'élément coopérant avec le crochet est un anneau (73),

les traverses horizontales de l'anneau s'engage l'une dans l'échancrure supérieure (75), l'autre du côté opposé du crochet.

4. Tête d'attelage selon l'une quelconque des revendications 1 à 3 caractérisée en ce que la face complémentaire est située sur le dessus du crochet.

5. Tête d'attelage selon la revendication 3 ou 4 caractérisée en ce que le crochet présente à sa base une section capable d'occuper toute la lumière de l'anneau.

6. Tête d'attelage selon l'une quelconque des revendications 1 à 5 caractérisée en ce que la partie arrière de liaison au timon comprend un élément amortisseur (27) comprenant au moins un bloc amortisseur (29, 39 à 42) et des moyens par sa combinaison à l'organe transversal (6) d'une part, et a la partie avant de la tête d'attelage (28) d'autre part.

7. Tête d'attelage selon la revendication 6 caractérisée en ce que le bloc amortisseur (29) est cylindrique, d'axe confondu avec l'axe longitudinal (10) du véhicule (3), en ce qu'il présent une partie centrale (30) et, de part et d'autre, deux parties (31, 32), toutes trois en forme de disque, et dont la partie centrale (30) est de diamètre inférieur au diamètre des deux autres parties (30, 32).

8. Tête d'attelage selon la revendication 7 caractérisée en ce que le bloc amortisseur (27) est traversé de part en part par un tube (33) de la partie avant (28), en ce qu'il est placé sur l'axe longitudinal (10) du véhicule entre deux flasques (35, 36) solidarisés au dit tube (33), et en ce que, par ailleurs, il est entouré au niveau de sa partie centrale (30) par un carter (36) solidaire de l'organe transversal (6).

9. Tête d'attelage selon la revendication 6 caractérisée en ce que l'élément amortisseur est constitué d'un manchon (60) enfilé sur l'organe transversal (6) et enserré dans un carter (61) relié à la partie avant de la tête d'attelage.

10. Tête d'attelage selon la revendication 6 caractérisée en ce que l'élément amortisseur est constitué de deux plots (62) agissant selon des axes qui sont situés dans un plan horizontal et qui sont intercalés entre une face de butée (63) associée à l'organe transversal avant (6) et une platine (64) associée à une tringle (65) portant à sont extrémité libre la partie avant (28) de la tête d'attelage.

**Patentansprüche**

1. Kupplungskopf (28) eines Zugfahrzeugs (3) für einen Anhänger (2), der mit einer angelenkten Deichsel ausgerüstet ist, das mindestens zwei Arme (4, 5) aufweist, die an einer Seite an ein Querlied (6), das mit dem Fahrzeug eisntückig fest verbindbar ist, und an der anderen Seite an ein einstückig mit dem Anhänger verbundenes Querglied (7) angelenkt sind, wobei die Arme (4, 5) und die Glieder (6, 7), wenn das Fahrzeug und der Anhänger sich in einer Linie befinden, ein gleichschenkliges Trapez bilden, das zumindest in einer horizontalen Ebene deformierbar ist, deren beide von den beiden Armen (4, 5) gebildete Seiten sich in der Nähe des rückwärtigen Fahrgestells des Fahrzeugs fiktiv schneiden, wobei der Kupplungskopf einerseits ein Vorderteil, das mit einem am Fahrzeug befstigten Verbindungsstück (72) zusammenwirkt, und andererseits ein hinteres Verbindungsteil für die Deichsel enthält, wobei der Teil vor dem Kupplungskopf enthält:

einen mit dem formschlüssig verbundenen Verbindungsstück verbundenen Haken (44, 71), und

ein mit der Deichsel verbundenes Element, das mit dem Haken zusammenwirkt und mit einer Sperreinrichtung versehen ist, das eine Rotation dieses Elements um die senkrechte Achse des Hakens hemmt,

wobei der Kupplungskopf außerdem einen Hebel (48; 83) enthält, der auf einem an der Deichsel befestigten Teil angelenkt ist und dessen Ende (53; 87) an seiner Oberseite sich unter eine nach unten gewandten und mit dem Haken formschlüssig verbundenen Stützfläche einfügt, was mit Hilfe dieser Oberseite des Endes (53; 87) dieses Hebels eine Unterstützung des Eingriffs des mit der Deichsel verbundenen Elements auf den Haken und eine Verriegelung dieses Elements mit dem Haken ermöglicht, dadurch gekennzeichnet, daß

der Haken außerdem eine komplementäre Stützfläche (55, Oberteil von 71) enthält, die so angeordnet ist, daß sie mit dem Hebel während seiner Betätigung im Sinne einer Eintriegelung zur Erleichterung der Freigabe des mit dem Hebel zusammenwirkenden Elements zusammenwirkt.

2. Kupplungskopf nach Anspruch 1, wobei

das mit dem Haken (44) zusammenwirkende Element, das durch das mit dem Fahrzeug verbundene Verbindungsstück (43) gebildet wird, aus einer Öffnung (47) mit im wesentlichen senkrechter Achse besteht, die das mit der Deichsel verbundene Teil bildet und dem Ende des Hakens (44) entspricht,

das Verbindungsstück außerdem mindestens zwei nach unten gerichtet Haken (45, 46) aufweist, dadurch gekenzneichnet, daß

die beiden nach unten gerichteten Haken den Haken (44), der das mit der Deichsel verbundene Element (47) aufnimmt, überragen und

die komplementäre Stützfläche unterhalb der beiden Haken (45, 46) gelegen ist und die Form eines abgerundet gebogenen Randes (55) aufweist.

3. Kupplungskopf nach Anspruch 1, wobei der Haken (71) von einer Grundplatte (72) getragen wird, mit welcher er einen sogenannten oberen bogenförmigen Ausschnitt (75) begrenzt, dadurch gekennzeichnet, daß

der Haken (71) an seiner Vorderkante einen sogenannten vorderen bogenförmigen Ausschnitt (77) aufweist,

das mit dem Haken zusammenwirkende Element ein Ring (73) ist,

die waagerechten Querstrücke des Ringes zum einen in den oberen bogenförmigen Ausschnitt (75), zum anderen in die entgegengesetzte Seite des Hakens eingreifen.

4. Kupplungskopf nach irgendeinem der Ansprüche 1 bis 4, dadurch gekennzeichnet, daß die komplementäre Fläche auf der Oberseite des Hakens gelegen ist.

5. Kupplungskopf nach Anspruch 3 oder 4, dadurch gekennzeichnet, daß der Haken an seiner Grundfläche einen Abschnitt aufweist, der die gesamte Öffnung des Ringes festlegen kann.

6. Kupplungskopf nach irgendeinem der Ansprüche 1 bis 5, dadurch gekennzeichnet, daß das hintere Verbindungsteil zur Deichsel ein Dämpfungselement enthält, das mindestens einen Dämpfungsblock (29, 39 bis 42) und Einrichtungen zu dessen Verbindung mit dem Querglied (6) einerseits und dem Tei vor dem Kupplungskopf (28) andererseits enthält.

7. Kupplungskopf nach Anspruch 6, dadurch gekennzeichnet, daß der Dämpfungsblock (29) zylindrisch ist, dessen Achse mit der Längsache (10) des Fahrzeugs (3) zusammenfällt, und daß er ein Mittelteil (30) und außerdem zwei Teile (31, 32) aufweist, die alle drei scheibenförmig ausgestaltet sind, wobei das Mittelteil (30) einen kleineren Durchmesser aufweist als die beiden anderen Teile (30, 32).

8. Kupplungskopf nach Anspruch 7, dadurch gekennzeichnet, daß der Dämpfungsblock (27) durchgehend von einer Röhre (33) des Vorderteils (28) durchschnitten wird, daß er auf der Längsachse (10) des Fahrzeugs zwischen zwei mit dem Rohr (33) formschlüssig verbudenen Flanschen (35, 36) gelegen ist und daß er außerdem auf dem Niveau seines Mittelteils (30) von einem mit dem Querglied (6) formschlüssig verbundenen Gehäuse (36) umgeben ist.

9. Kupplungskopf nach Anspruch 6, dadurch gekennzeichnet, daß das Dämpfungselement von einer Hülse (60) gebildet wird, die auf dem Querglied (6) angebracht ist und von einem Gehäuse (61) umgeben wird, das an dem Teil vor dem Kupplungskopft befestigt ist.

10. Kupplungskopf nach Anspruch 6, dadurch gekennzeichnet, daß das Dämpfungselement aus zwei Buchsen (62) gebildet wird, die entlang der in einer waagerrechten Ebene gelegenen Achsen wirken und die zwischen einer am vorderen Querglied (6) befestigten Stützfläche und einer an einer Stange (65) befestigten Platte (64) gelegen sind, das einem seinem freien Ende das Vorderteil (28) des Kupplungskopfes trägt.

**Claims**

1. Coupling head (28) for coupling to a towing vehicle (3) a trailer (2) equipped with articulated drawgear comprising at least two arms (4, 5) articulated on one side to a cross member (6) connectable to the vehicle and, on the other side, to a cross member (7) connected to the trailer, the arms (4, 5) and the members (6, 7) constituting, when the vehicle and the trailer are aligned, an isosceles trapezium which is deformable at least in a horizontal plane of which the two oblique sides formed by the two arms (4, 5) intersect in an imaginary manner in the vicinity of the rear chassis of the vehicle, this coupling head comprising, on the one hand, a front portion co-operating with a fastening means (72) attached to the vehicle and, on the other hand, a rear portion for linkage to the drawgear, the front portion of the coupling head comprising:

attached to the fastening means connected to the vehicle, a hook (44; 71) and,

attached to the drawgear, an element co-operating with the hook and provided with means for rotationally engaging this element round the vertical axis of the hook, this coupling head also comprising a lever (48; 83) articulated to a part attached to the drawgear and of which the end (53; 87) has its upper face which is inserted beneath a downwardly turned supporting face integral with the hook enabling this upper face of the end (53; 87) of this lever to assist the engagement of the element attached to the drawgear with this hook and to lock this element to the hook, this coupling head being characterised in that the hook also comprises a complementary supporting face (55; upper portion of 71) arranged so as to co-operate with the lever when it is manipulated in the unlocking direction to facilitate the release of the element co-operating with the hook.

2. Coupling head according to claim 1, of which:

the element co-operating with the hook (44), presented by the fastening means (43) attached to the vehicle, consists of an orifice (47) having a substantially vertical axis presented by the portion attached to the drawgear and corresponding to the end of said hook (44),

said fastening means also has at least two downwardly directed hooks (45, 46), this fastening means being characterised in that

the two downwardly directed hooks surmount the hook (44) receiving the element (47) attached to the drawgear and

the complementary supporting face is located beneath the two hooks (45, 46) and assumes the form of a rounded rib (55).

3. Coupling head according to claim 1, of which the hook (71) is carried by a base (72) with which it defines a so-called upper scallop, characterised in that

toward its front edge, the hook (71) has a so-called front scallop (77),

the element co-operting with the hook is a ring (73),

one of the horizontal crossbars of the ring engages in the upper scallop (75) and the others on the side remote from the hook.

4. Coupling head according to any one of claims 1 to 3, characterised in that the complementary face is located on the top of the hook.

5. Coupling head according to claim 3 or 4, characterised in that the hook has, at its base, a section capable of occupying the entire aperture of the ring.

6. Coupling head according to any one of claims 1 to 5, characterised in that the rear portion for linkage to the drawgear comprises a damping element (27) comprising at least one damping block (29, 39 to 42) and means for combining it with the cross member (6) on the one hand and the front portion of the coupling head (28) on the other hand.

7. Coupling head according to claim 6, characterised in that the damping block (29) is cylindrical and has its axis combined with the longitudinal axis (10) of the vehicle (3), in that it has a central portion (30) and, on either side, two portions (31, 32), all three portions being disc-shaped and of which the central portion (30) has a smaller diameter than the two other portions (30, 32).

8. Coupling head according to claim 7, characterised in that the damping block (27) is traversed right through by a tube (33) of the front portion (28), in that it is placed on the longitudinal axis (10) of the vehicle between two shields (35, 36) connected to said tube (33) and in that, furthermore, it is surrounded in the region of its central portion (30) by a housing (36) connected to the cross member (6).

9. Coupling head according to claim 6, characterised in that the damping element consists of a sleeve (60) slipped on the cross member (6) and gripped in a housing (61) joined to the front portion of the coupling head.

10. Coupling head according to claim 6, characterised in that the damping element consists of two studs (62) acting along axes which are located in a horizontal plane and are intercalated between a stop face (63) attached to the front cross member (6) and a plate (64) attached to rod (65) carrying, at its free end, the front portion (28) of the coupling head.

_Fig: 1_

_Fig:2_

_Fig:3_

_Fig:4_

_Fig:5_

Fig:6.  28

6

27 b

66

63       62       64

Fig:7.

27 a.

60

61

6

Fig:8

27c.

67

6

65

69

68

Fig:9_

Fig:10_